# EUROPÄISCHE PATENTANMELDUNG

(11) **EP 2 591 969 A1**
(43) Veröffentlichungstag der Anmeldung: **15.05.2013**
(21) Anmeldenummer: 12007293.9
(22) Anmeldetag: 24.10.2012
(51) Int. Cl.: B60W 40/09, B60K 28/06, G08B 21/06, B60W 40/08

(54) **Verfahren zum Betrieb eines Fahrzeugsystems eines Kraftfahrzeugs und Kraftfahrzeug**

(30) Priorität: 08.11.2011 DE 102011117850
(71) Anmelder: AUDI AG, 85045 Ingolstadt (DE)
(72) Erfinder: Schadeck, Michael, 85057 Ingolstadt (DE)
(74) Vertreter: Thielmann, Frank

(57) **Zusammenfassung**

Verfahren zum Betrieb eines Fahrzeugsystems eines Kraftfahrzeugs zur Bestimmung wenigstens einer den Zustand eines Fahrers, insbesondere seine Aufmerksamkeit und/oder seine Müdigkeit, beschreibenden Zustandsgröße, wobei bei der Ermittlung der Zustandsgröße wenigstens ein einen Referenzzustand, insbesondere einen Normalzustand, des Fahrers beschreibender Referenzdatensatz (16) verwendet wird, wobei während einer gesamten Fahrt des Kraftfahrzeugs kontinuierlich die Bedingungen (9a-9q) einer wenigstens eine Bedingung (9a-9q) umfassenden Bedingungsgruppe überprüft werden, wobei bei Eintritt aller Bedingungen (9a-9q) der Bedingungsgruppe solange, wie alle Bedingungen (9a-9q) erfüllt sind, ein Referenzdatensatz (16) aufgenommen wird und zur Kalibrierung und/oder Anpassung wenigstens eines Betriebsparameters des Fahrzeugsystems ausgewertet wird.

## Beschreibung

Die Erfindung betrifft ein Verfahren zum Betrieb eines Fahrzeugsystems eines Kraftfahrzeugs zur Bestimmung wenigstens einer den Zustand eines Fahrers, insbesondere seine Aufmerksamkeit und/oder seine Müdigkeit, beschreibenden Zustandsgröße, wobei bei der Ermittlung der Zustandsgröße wenigstens ein einen Referenzzustand, insbesondere einen Normalzustand, des Fahrers beschreibender Referenzdatensatz verwendet wird. Daneben betrifft die Erfindung ein Kraftfahrzeug.

Fahrzeugsysteme, insbesondere Fahrerassistenzsysteme, die zur Ermittlung einer den Zustand des Fahrers beschreibenden Zustandsgröße und zu deren Verwendung ausgebildet sind, wurden bereits vorgeschlagen. Beispielsweise kann dann, wenn eine hohe Müdigkeit des Fahrers festgestellt wird, ein Hinweis auf eine Pause ausgegeben werden und/oder es können Betriebsparameter anderer Fahrzeugsysteme dem reduzierten Wachheitsgrad des Fahrers angepasst werden. Ähnliche Hinweis- und Anpassungssysteme sind auch bezüglich der Aufmerksamkeit des Fahrers bekannt, wobei beispielsweise überprüft werden kann, ob der Fahrer seine Aufmerksamkeit dem Verkehrsgeschehen widmet oder Nebentätigkeiten nachgeht. Gerade dann, wenn beispielsweise semiautonome Fahrerassistenzsysteme, beispielsweise Längsführungssysteme oder Querführungssysteme, eingesetzt werden, kann ein die Aufmerksamkeit und/oder Müdigkeit des Fahrers überwachendes System nützlich sein.

Um die Zustandsgröße zu ermitteln, werden Daten unterschiedlichster Art aufgenommen und/oder interpretiert. Häufig wurde vorgeschlagen, eine Innenraumkamera einzusetzen, die den Kopf und das Gesicht des Fahrers beobachtet. Hier kann beispielsweise ein Modell des Kopfes betrachtet werden, so dass die Orientierung des Kopfes, die Zeitdauern, in denen die Augen geöffnet und geschlossen sind, die Lidschlussgeschwindigkeit und dergleichen ermittelt und im Hinblick auf eine Zustandsgröße ausgewertet werden können. Ein weiteres Beispiel für einen Sensor, dessen Daten Hinweise auf den Zustand eines Fahrers geben können, sind Lenksensoren, über die das Lenkverhalten des Fahrers nachverfolgt werden kann. Auch entsprechende Pedalsensoriken werden eingesetzt. Jedoch können auch Umgebungsdaten ausgewertet werden, um beispielsweise zu überprüfen, wie genau der Fahrer aktuell eine Spur hält, da auch dies einen Hinweis auf seine Müdigkeit und/oder Aufmerksamkeit geben kann. Ersichtlich können verschiedenste Arten von Sensordaten und Parametern betrachtet werden, um hieraus eine Aussage über die Müdigkeit und/oder Aufmerksamkeit des Fahrers zu erhalten.

Um einen derart aufgenommenen, das Verhalten eines Fahrers in einer bestimmten Fahrsituation beschreibenden Situationsdatensatz auszuwerten, insbesondere überhaupt interpretieren zu können, muss eine Vergleichsmöglichkeit bestehen, die den Fahrer möglichst in einen aufmerksamen und/oder wachen Zustand wiedergibt. Nur so können Abweichungen von diesem "Normalzustand" sinnvoll detektiert und bewertet werden. Für die zuverlässige Funktionsweise der Klassifikations- und Interpretationsalgorithmen ist also die Ermittlung des Norm-Verhaltens des Fahrers notwendig, welches dann einem Referenzdatensatz entspricht, der als Referenzzustand idealerweise einen Normalzustand wiedergibt. Ein solcher Referenzdatensatz wird im Stand der Technik auch häufig als "Baseline" bezeichnet. Um den Referenzdatensatz zu ermitteln, ist es bekannt, zu Beginn jeder Fahrt einen festen Kalibrierungszeitraum zu verwenden, in dem die eigentliche Funktion des Fahrzeugsystems, beispielsweise eine Warn- und/oder Anpassungsfunktion, nicht zur Verfügung steht. Während des Kalibrierungszeitraums werden alle notwendigen und verfügbaren Daten aufgezeichnet und zu einem Referenzdatensatz zusammengefasst, wobei allerdings nicht bekannt ist, ob tatsächlich einen Normalzustand beschreibende Daten erhalten werden und die Datenqualität ausreichend ist. Mithin sind häufig sehr lange Zeitspannen als Kalibrierungszeitraum angesetzt. Für diese lange Zeitspanne, beispielsweise zwanzig Minuten, steht die eigentliche Funktion des Fahrzeugsystems nicht zur Verfügung.

Durch die beschriebene Routine zur Bestimmung der "Baseline", also des Referenzdatensatzes, wird eine große Menge an Daten gesammelt. Dabei werden besondere Vorkommnisse während des Kalibrierungszeitraums nicht berücksichtigt. Zudem wird nachteilhafterweise ein festes Zeitfenster zur Kalibrierung vorgegeben, ungeachtet der eventuell bereits ausreichend gesammelten Datenmenge. Auch die Verlässlichkeit der aufgenommenen Referenzdaten kann nicht gesichert werden. Infolgedessen besteht die Möglichkeit der Performance-Einbußen der nachgelagerten Algorithmen zur Interpretation des Fahrerzustandes, da eine relevante Bestimmung des Fahrerzustandes verspätet beginnt und/oder auf schlechten Basisdaten beruht.

Der Erfindung liegt daher die Aufgabe zugrunde, eine Möglichkeit anzugeben, schnell zu verlässlichen Referenzdaten eines Referenzdatensatzes zu gelangen und eine bleibende Aktualität des Referenzdatensatzes zu ermöglichen.

Zur Lösung dieser Aufgabe ist bei einem Verfahren der eingangs genannten Art erfindungsgemäß vorgesehen, dass während einer gesamten Fahrt des Kraftfahrzeugs kontinuierlich die Bedingungen einer wenigstens eine Bedingung umfassenden Bedingungsgruppe überprüft werden, wobei bei Eintritt aller Bedingungen der Bedingungsgruppe solange, wie alle Bedingungen erfüllt sind, ein Referenzdatensatz aufgenommen wird und zur Kalibrierung und/oder Anpassung wenigstens eines Betriebsparameters des Fahrzeugsystems ausgewertet wird.

Erfindungsgemäß wird also vorgeschlagen, beispielsweise anhand eines vorgeschalteten Softwaremoduls, anhand festgelegter Kriterien - den Bedingungen der Bedingungsgruppe - Fahrsituationen zu erkennen, welche für die Aufnahme eines Referenzdatensatzes ("Baseline") in Frage kommen. Für diese Abschnitte werden Referenzdaten aufgenommen und gespeichert, wobei insbesondere nach Beendigung des Baseline-Abschnittes, also dann, wenn wenigstens eine Bedingung nicht mehr erfüllt ist, die aufgenommenen Referenzdaten genutzt werden, um die Betriebsparameter des Fahrzeugsystems anzupassen und/oder zu kalibrieren, beispielsweise also nachgelagerte Softwaremodule zur Fahrerzustandserkennung zu kalibrieren und/oder deren Parametrierung anzupassen/nachzuführen. Die Bedingungen der Bedingungsgruppe werden während der gesamten Fahrt überwacht, so dass eine ständige Nachführung, Aktualisierung und Verbesserung der Datenbasis der Referenzdatensätze möglich ist.

So findet vorteilhafterweise eine saubere und zügige Bestimmung von Baseline-Abschnitten und somit Referenzdaten statt. Die Fahrerzustandsschätzung liefert exaktere und zuverlässigere Werte für die Zustandsgröße, die Falsch-Positiv-Rate wird abgesenkt. Insbesondere ermöglicht es die vorliegende Erfindung auch, schneller und definiert an eine verlässliche Datenbasis für die Baseline-Bestimmung heranzukommen, nachdem Daten gezielt ausgewertet werden und somit schon bei wenigen Referenzdaten eine hohe Qualität des Referenzdatensatzes gegeben ist. Die Funktion des Fahrzeugsystems kann sofort und/oder nach einer kürzeren Kalibrierungsphase zugeschaltet werden, worauf im Folgenden noch näher eingegangen werden wird.

In konkreter Ausgestaltung der vorliegenden Erfindung kann vorgesehen sein, dass die Bedingungen wenigstens eine auf Egodaten des eigenen Kraftfahrzeugs bezogene Bedingung und/oder wenigstens eine auf Sensordaten wenigstens eines Sensors, insbesondere einer Innenraumkamera, bezogene Bedingung und/oder wenigstens eine auf Systemdaten wenigstens eines weiteren Fahrzeugsystems, insbesondere von längsführenden oder querführenden Fahrerassistenzsystemen, bezogene Bedingung überprüft werden. Im Sinne einer gewissen Modularität können die Bedingungen also in Untergruppen eingeteilt werden, die beispielsweise immer dann angewandt werden, wenn die entsprechenden Sensoren/Fahrerassistenzsysteme vorliegen und eine Auswertung sinnvoll ist. So kann beispielsweise bezüglich der längsführenden oder der querführenden Fahrerassistenzsysteme, die autonom oder semiautonom Fahreingriffe vornehmen, vorgesehen sein, dass die entsprechenden Kriterien immer dann nicht ausgewertet werden, wenn das Fahrerassistenzsystem aktiv ist. Beispielsweise ist die Auswertung einer Zeitlücke zum Vordermann nur dann sinnvoll, wenn diese nicht ohnehin durch ein ACC-System geregelt wird. Außerdem kann vorgesehen sein, dass dann, wenn Sensoren nicht verbaut sind, entsprechende Daten nicht berücksichtigt werden. Dabei sei an dieser Stelle noch darauf hingewiesen, dass zumindest die Mittel bzw. Sensoren zur Ermittlung der Egodaten heutzutage in einem Großteil der Kraftfahrzeuge verbaut sind.

Zweckmäßigerweise können als auf Egodaten bezogene Bedingung das Überschreiten einer Minimalgeschwindigkeit des Kraftfahrzeugs und/oder das Unterschreiten eines Schwellwerts für den Betrag des Lenkwinkels und/oder ein nicht gesetzter Blinker und/oder ein Unterschreiten eines Schwellwerts für den Betrag der Beschleunigung und/oder die Nichtbetätigung eines Bremsbedienelements durch den Fahrer und/oder das Unterschreiten eines Schwellwerts für den Gaspedalgradienten und/oder die Nichtbetätigung wenigstens eines Bedienelements für eine vorbestimmte Zeitspanne und/oder eine einen Schwellwert unterschreitende, aus Egodaten bestimmte Kurvigkeit verwendet werden. Die hier genannten möglichen Bedingungen, die mit besonderem Vorteil allesamt betrachtet werden, beschreiben letztlich eine bestimmte Fahrsituation, in der ein "Normalzustand" eines Fahrers recht wahrscheinlich ist, beispielsweise also mit einer bestimmten Geschwindigkeit gefahren wird und nicht zu stark gelenkt wird. Ferner kann über den Blinker überprüft werden, ob gerade ein Abbiegevorgang ansteht oder geplant ist, zu starke Beschleunigungen oder Bremsvorgänge außerhalb der Motorbremse können ausgeschlossen werden, da diese das Verhalten des Fahrers außerhalb einer Normalsituation bedingen. Auch kann überprüft werden, wie heftig eine Pedalerie bedient wird, indem beispielsweise ein Gaspedalgradient betrachtet wird. Bedieneingriffe, insbesondere auch an nicht dem eigentlichen Fahren dienenden Bedienelementen, beispielsweise denen einer Klimaanlage und/oder einer Multimedia-Einrichtung, können ebenso darauf hindeuten, dass der Fahrer gerade abgelenkt ist und sich der aktuelle Zustand nicht als Baseline eignet. Beispielsweise kann als Bedingung vorgesehen sein, dass für 15 Sekunden keine derartigen Bedieneingriffe erfolgt sind. Schließlich kann auch die Kurvigkeit, welche vorliegt aus Egodaten ermittelt wird, insbesondere aus dem Lenkwinkel, einer Zeit und der Geschwindigkeit des Kraftfahrzeugs, betrachtet werden, da besonders kurvige Straßen besondere Leistungen vom Fahrer erfordern und mithin nicht einen Normalzustand widerspiegeln. Beispielsweise kann die Kurvigkeit über die letzten ein bis zwei Kilometer betrachtet werden.

Weiterhin kann vorgesehen sein, dass als auf Sensordaten einer Innenraumkamera bezogene Bedingung die Überschreitung eines Schwellwerts durch einen die Qualität der Sensordaten beschreibenden Gütewert und/oder die Unterschreitung eines Schwellwerts für den Betrag des horizontalen Schwenkwinkels des Kopfes des Fahrers aus einer geradeaus schauenden Position und/oder die Unterschreitung eines Schwellwerts für die auf den horizontalen Schwenkwinkel des Kopfes des Fahrers aus der geradeaus schauenden Position bezogenen Spreizung für ein vorbestimmtes Zeitintervall und/oder die Unterschreitung eines Schwellwerts für den Betrag des vertikalen Schwenkwinkels des Kopfes des Fahrer aus einer geradeaus schauenden Position und/oder die Unterschreitung eines Schwellwerts für die auf den vertikalen Schwenkwinkel des Kopfes des Fahrers aus der geradeaus schauenden Position bezogene Spreizung für ein vorbestimmtes Zeitintervall verwendet wird. Häufig wird von Fahrzeugsystemen, die eine Zustandsgröße des Fahrers bestimmen sollen, eine Innenraumkamera eingesetzt, so dass diese hier als Beispiel zur Illustration von möglichen auf einen derartigen Sensor bezogenen Bedingungen verwendet wird. Insbesondere die Bedingung bezüglich der Güte der Messdaten lässt sich selbstverständlich auf jeden anderen Sensor, dessen Daten zu dem Referenzdatensatz hinzugefügt werden sollen, bezogen einsetzen. Bezüglich der Kamera kann nun konkret überprüft werden, ob keine zu starke Bewegung des Kopfes in einer vertikalen Ebene, also nach links oder rechts, vorliegt, welcher Winkelbereich im Englischen häufig als "heading" bezeichnet wird. Neben dem Absolutwert der Abweichung von einer geradeaus-Richtung kann zusätzlich auch die Spreizung für ein vorbestimmtes Zeitintervall, beispielsweise zwei Sekunden, betrachtet werden. Beispielsweise kann vorgesehen sein, dass die Spreizung bezüglich der links-rechts-Bewegung des Kopfes 25° in zwei Sekunden nicht überschreiten soll. Dieselbe Betrachtung kann aber auch für die Vertikalbewegung des Kopfes (Nicken), englisch: "pitch", durchgeführt werden. Beispielsweise soll der Betrag des Pitchwinkels 15° nicht überschreiten, wobei die Spreizung über zwei Sekunden ebenso 15° nicht überschreiten soll. Auch hier ist es vorteilhaft, wenn alle genannten Bedingungen gemeinsam betrachtet werden.

Als auf Systemdaten eines weiteren Fahrzeugsystems bezogene Bedingung können eine Unterschreitung eines Schwellwerts für die Zeit bis zum Verlassen einer Fahrspur und/oder eine Unterschreitung eines Schwellwerts für die Standardabweichung von der Mitte der aktuellen Fahrspur und/oder, falls ein voranfahrendes Fahrzeug detektiert wird, das Vorhandensein einer minimalen Zeitlücke zu dem voranfahrenden Fahrzeug und/oder eine in einem Intervall um 0 liegende relative Geschwindigkeit zu dem voranfahrenden Fahrzeug verwendet werden. Dabei sind, wie bereits erwähnt wurde, besonders die Systemdaten von querführenden und/oder längsführenden Fahrerassistenzsystemen nützlich, wobei, wenn diese selbst Fahreingriffe vornehmen können, solche Systemdaten in den Bedingungen immer dann nicht mehr beachtet werden können, wenn das entsprechende, zur Ausführung von Fahreingriffen ausgebildete Fahrerassistenzsystem gerade aktiv ist, da dann keiner Aussage geschlussfolgert werden kann, ob sich der Fahrer in einem Normalzustand befindet. Jedoch ist es üblich, dass die entsprechenden Systemdaten auch dann bestimmt werden, wenn die Fahrzeugsysteme, konkret die Fahrerassistenzsysteme, gerade nicht aktiv sind, so dass sie über das Bussystem des Kraftfahrzeuges an das Fahrzeugsystem, welches die Zustandsgröße bestimmt, weitergeleitet werden können.

Wie bereits erwähnt, ist es zweckmäßig, wenn ein im Rahmen der Bedingungen betrachteter Sensor auch Sensordaten für den Referenzdatensatz und zur Ermittlung der Zustandsgröße liefert. So kann mithin eine Art "Vorauswertung" der Sensordaten hinsichtlich des Fahrerzustands als Bedingung angesetzt werden, wo grob abgeschätzt wird, ob ein Normalzustand des Fahrers vorliegen könnte. Zudem kann die Qualität der Sensordaten überwacht werden, so dass nicht Messfehler oder dergleichen zu großen Einfluss auf die Referenzdatensätze nehmen.

In einer besonders vorteilhaften Ausgestaltung der vorliegenden Erfindung kann vorgesehen sein, dass die Bedingungen und/oder die Zugehörigkeit von Bedingungen zu der Bedingungsgruppe in Abhängigkeit von die Fahrsituation beschreibenden Fahrsituationsdaten dynamisch angepasst werden. Ein Beispiel für solch eine dynamische Anpassung der Kriterien, die zur Aufnahme eines Referenzdatensatzes führen können, wurde bereits im Hinblick auf zur Durchführung von Fahreingriffen ausgebildete längsführende und/oder querführende Fahrerassistenzsysteme beschrieben, bei denen immer dann, wenn diese in Betrieb sind, durch die Fahreingriffe (also nicht durch den Fahrer) beeinflusste Systemdaten verarbeitende Bedingungen nicht mehr berücksichtigt werden. Jedoch sind auch weitere vorteilhafte Einflussfaktoren denkbar, in deren Abhängigkeit eine solche vorteilhafte dynamische Anpassung von Bedingungen bzw. der Bedingungsgruppe zweckmäßig ist.

So kann vorgesehen sein, dass bei einer Nichtverfügbarkeit eines Sensors und/oder eines Fahrzeugsystems und/oder einer zur Ermittlung von Egodaten ausgebildeten Vorrichtung die auf die ausfallenden Daten bezogenen Bedingungen aus der Bedingungsgruppe entfernt werden. Es kann also ständig die Verfügbarkeit von Daten, die als Eingangsdaten der Bedingungen verwendet werden, überwacht werden, worin sich auch das bereits eingangs näher diskutierte modulare Prinzip widerspiegelt. Fällt ein System aus, können auch die entsprechenden Bedingungen nicht mehr sinnvoll überprüft werden und können mithin aus der Bedingungsgruppe entfernt werden.

Ferner kann vorgesehen sein, dass für einen vorbestimmten Zeitraum nach dem Beginn einer Fahrt zur leichteren Erfüllbarkeit angepasste Bedingungen verwendet werden. Eine derartige Ausgestaltung ist insbesondere dann nützlich, wenn zu Beginn einer Fahrt schnell Referenzdaten gewonnen werden sollen, um möglichst bald Funktionen des Fahrzeugsystems im Betrieb nehmen zu können. Ein solcher Zeitraum kann mithin auch als eine Art Kalibrierungsphase betrachtet werden, bei dem die Bedingungen zunächst etwas lockerer gehalten sind, um schneller Referenzdaten aufnehmen zu können, wobei nach Ablauf dieser Kalibrierungsphase dann durch die im Rahmen der Erfindung vorgesehene ständige Nachführung gegebenenfalls auftretende Ungenauigkeiten über die Zeit durch Nachkalibrierung wieder verschwinden. Beispielsweise können also innerhalb des vorbestimmten Zeitraums nach dem Beginn einer Fahrt Schwellwerte niedriger bzw. höher angesetzt werden und dergleichen. Ein solcher Zeitraum kann beispielsweise zwei bis fünf Minuten lang sein. Denkbar ist es im Übrigen aber auch, nicht einen vorbestimmten Zeitraum nach dem Beginn einer Fahrt zu verwenden, sondern die Dauer des Zeitraums nach dem Beginn der Fahrt von der aufgenommenen Datenmenge abhängig zu machen.

In einer besonders vorteilhaften Ausgestaltung der vorliegenden Erfindung kann vorgesehen sein, dass die Anpassung und/oder die Berücksichtigung von Bedingungen in der Bedingungsgruppe in Abhängigkeit von einer aktuellen Fahrumgebung, insbesondere einer Straßenklasse, erfolgt. Eine Straßenklasse der aktuell befahrenen Straße kann dabei beispielsweise aus einem Navigationssystem erhalten werden. So kann beispielsweise vorgesehen sein, dass bei Befahren einer Autobahn auf das Halten einer Spur bezogene Bedingungen enger gefasst werden als in anderen Fahrumgebungen. Bei einer Fahrt im Stadtverkehr kann beispielsweise eine auf einen Vordermann bzw. die Zeitlücke auf ein voranfahrendes Fahrzeug bezogene Bedingung deaktiviert werden, ähnlich wie Bedingungen, die sich auf Systemdaten eines ACC- und/oder Spurhaltesystems beziehen. Ersichtlich sind verschiedenste Möglichkeiten denkbar, die Kriterien für verschiedene Fahrumgebungen dynamisch anzupassen.

In Weiterbildung des erfindungsgemäßen Verfahrens können die Referenzdatensätze mit einer ihre Aufnahmezeit angebenden Zeitinformation in einer Speichereinrichtung gespeichert werden. Die aufgenommenen Referenzdatensätze werden also zeitlich gelabelt in einer Speichereinrichtung hinterlegt. Sobald der Referenzdatensatz gespeichert ist, mithin eine der Bedingungen der Bedingungsgruppe nicht mehr erfüllt ist, kann beispielsweise ein Signal an entsprechend nachgelagerte Softwaremodule und/oder Algorithmen gesandt werden, um die Verfügbarkeit neuer Referenzdaten mitzuteilen. Ausgelöst durch ein derartiges Triggersignal kann jedes nachgelagerte Softwaremodul und/oder jeder nachgelagerte Algorithmus selbstständig den Referenzdatensatz aus der Speichereinrichtung lesen und die eigenen Routinen (nach-)kalibrieren oder neu parametrieren. Solche nachgelagerten Softwaremodule und/oder Algorithmen werden im Folgenden zusammenfassend als "Auswertungsmodule" bezeichnet.

Ist also wenigstens ein Auswertungsmodul zur Auswertung der Referenzdatensätze vorgesehen, kann mit besonderem Vorteil wenigstens ein Kriterium zur Auswahl der durch ein Auswertungsmodul auszuwertenden Referenzdatensätze verwendet werden, insbesondere eine minimale Aufnahmedauer. Nachdem nicht jeder Referenzdatensatz sinnvoll durch jedes Auswertungsmodul ausgewertet werden kann, können beispielsweise Kriterien vorgesehen sein, wobei im zweckmäßigen Beispiel eine minimale Aufnahmedauer genannt ist. So kann beispielsweise bezüglich auszuwertender Sensordaten einer Innenraumkamera vorgesehen sein, dass hier nur Referenzdatensätze bearbeitet werden, deren Aufnahmedauer mindestens zehn Sekunden beträgt. Doch auch bei anderen Arten von Daten, insbesondere solchen, die statistisch ausgewertet werden, sind solche minimalen Aufnahmedauern sinnvoll zu berücksichtigen.

Vorzugsweise kann das Kriterium in Abhängigkeit eines Fahrsituationsparameters angepasst werden, insbesondere eine reduzierte minimale Aufnahmedauer in einem vorbestimmten Zeitraum nach Beginn einer Fahrt verwendet werden. Auch Kriterien, die die Auswertung der Referenzdatensätze durch Auswertungsmodule betreffen, können mithin dynamisch anpassbar sein, besonders vorteilhaft in einer Kalibrierphase, wie sie bereits beschrieben wurde. Um schneller eine Kalibrierung bzw. eine geeignete Einstellung von Betriebsparametern zu erreichen, kann zu Beginn der Fahrt auch eine Auswertung von Referenzdatensätzen einer kürzeren Aufnahmedauer erlaubt werden. Jedoch können Kriterien auch anderweitig während der Fahrt dynamisch anpassbar sein, beispielsweise im Hinblick auf die Fahrumgebung, das Vorhandensein von Vorderfahrzeugen und dergleichen. Vorteilhaft ist es ferner, wenn wenigstens zwei Speichereinrichtungen verwendet werden. Diese Ausbildung des erfindungsgemäßen Verfahrens ist vor allem dann nützlich, wenn die Auswertung der Referenzdatensätze durch die Auswertungsmodule eine bestimmte Zeitspanne benötigt, in der bereits neue Referenzdaten aufgenommen werden, die folglich nicht gleichzeitig wie der andere Referenzdatensatz ausgewertet werden können und mithin in einer weiteren Speichereinrichtung abgelegt werden können. Allgemein können die Referenzdatensätze in den Speichereinrichtungen bzw. der einen Speichereinrichtung nach Art einer Liste abgelegt werden.

Wie bereits diskutiert wurde, kann es im Rahmen der vorliegenden Erfindung vorgesehen sein, eine gewisse Kalibrierphase vorzusehen, in der es insbesondere auf einfachere Art und Weise ermöglicht wird, möglichst schnell zu Referenzdaten zu kommen, die zur Kalibrierung und/oder Einstellung von Betriebsparametern genutzt werden können. Denkbar ist es im Rahmen des erfindungsgemäßen Verfahrens jedoch auch, dass zu Beginn einer Fahrt das Fahrzeugsystem mit einer voreingestellten Kalibrierung und/oder voreingestellten Betriebsparametern betrieben wird, so dass auch sofort die Funktionen des Fahrzeugsystems genutzt werden können, ohne dass die Kalibrierphase abgewartet werden muss. In diesem Fall werden beispielsweise möglichst generelle Einstellungen vorgenommen, die dann erst durch die bei Erfüllung der Bedingungen der Bedingungsgruppe getriggerte Aufnahme der Referenzdatensätze auf den aktuellen Fahrer angepasst werden. In einer weiteren Verbesserung kann jedoch auch vorgesehen sein, dass zu Beginn einer Fahrt das Fahrzeugsystem mit einer aus wenigstens einem in einer vorangegangenen Fahrt, insbesondere einer vorangegangenen Fahrt desselben Fahrers, aufgenommenen Referenzdatensatz gewonnenen Kalibrierung und/oder aus wenigstens einem in einer vorangegangenen Fahrt, insbesondere einer vorangegangenen Fahrt desselben Fahrers, aufgenommene Referenzdatensatz gewonnenen Betriebsparametern betrieben wird. In diesem Fall werden letztlich Referenzdaten von der oder einer vorangehenden Fahrt übernommen, wobei es besonders bevorzugt ist, wenn eine Zuordnung nach Fahrern erfolgen kann. Hierzu kann beispielsweise vorgesehen sein, dass ein Fahrer vor Beginn einer Fahrt identifiziert wird und eine dem Fahrer entsprechende Kalibrierung und/oder dem Fahrer entsprechende Betriebsparameter eingestellt werden. Die "Baseline" ist für unterschiedliche Fahrer häufig relativ unterschiedlich, so dass eine solche fahrerspezifische Wiederverwertung von Referenzdatensätzen bzw. den daraus abgeleiteten Einstellungen sehr zweckmäßig ist, wenn ein Betrieb der Funktionen des Fahrzeugsystems auch bereits zu Beginn einer Fahrt realisiert werden soll.

In weiterer Ausgestaltung des erfindungsgemäßen Verfahrens kann vorgesehen sein, dass nur innerhalb eines vorbestimmten Zeitintervalls vor dem aktuellen Zeitpunkt aufgenommene und/oder eine bestimmte Zahl zuletzt aufgenommener Referenzdatensätze bei der Kalibrierung und/oder Anpassung wenigstens eines Betriebsparameters des Fahrzeugsystems berücksichtigt werden. Insbesondere kann vorgesehen sein, dass immer der letzte aufgenommene Referenzdatensatz bei der (Nach-)Kalibrierung und/oder Einstellung bzw. Anpassung wenigstens eines Betriebsparameters betrachtet wird, wobei ein bisheriger eingestellter Wert gewichtet weiter mitgeführt werden kann. Möglich ist es jedoch auch, eine bestimmte Anzahl in der letzten Zeit betrachteter Referenzdatensätze gemeinsam zu berücksichtigen, gegebenenfalls zeitlich gewichtet. Verschiedene Möglichkeiten sind hier denkbar, um die aktuelle Nachführung zu ermöglichen.

Neben dem Verfahren betrifft die vorliegende Erfindung auch ein Kraftfahrzeug, umfassend ein Fahrzeugsystem zur Bestimmung wenigstens einer den Zustand des Fahrers, insbesondere seine Aufmerksamkeit und/oder seine Müdigkeit, beschreibenden Zustandsgröße, und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchem mithin auch die bereits genannten und diskutierten Vorteile erreicht werden können.

Weitere Vorteile und Einzelheiten der vorliegenden Erfindung ergeben sich aus den im Folgenden beschriebenen Ausführungsbeispielen sowie anhand er Zeichnung. Dabei zeigen:
- Fig. 1: eine Prinzipskizze eines erfindungsgemäßen Kraftfahrzeugs, und
- Fig. 2: eine Skizze zur Durchführung des erfindungsgemäßen Verfahrens.

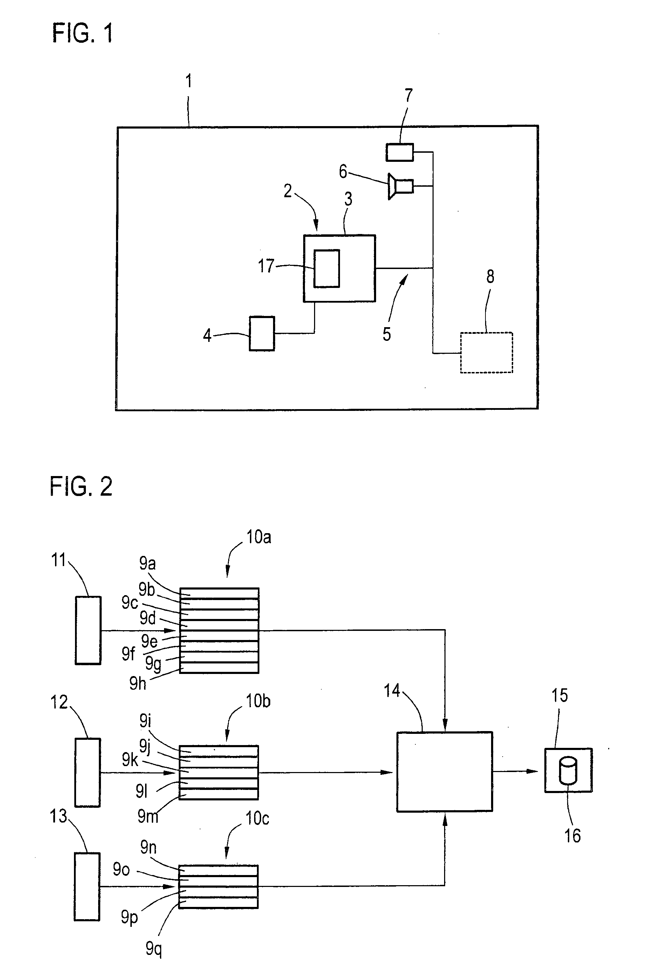

Fig. 1 zeigt eine Prinzipskizze eines erfindungsgemäßen Kraftfahrzeugs 1. Das Kraftfahrzeug 1 umfasst ein Fahrzeugsystem 2 zur Bestimmung von den Zustand eines Fahrers beschreibenden Zustandsgrößen, wobei hier insbesondere die Aufmerksamkeit des Fahrers und die Müdigkeit des Fahrers beschreibende Zustandsgrößen ermittelt werden. Hierzu ist ein Steuergerät 3 vorgesehen, in dem die entsprechenden Funktionen durch Hardware- und/oder Softwaremodule realisiert sind. Beispielsweise kann das Fahrzeugsystem 2 dazu ausgebildet sein, bei einer festgestellten, einen Schwellwert überschreitenden, die Müdigkeit des Fahrers beschreibenden Zustandsgröße an einem entsprechenden Anzeigemittel 4 einen Hinweis auf eine notwendige Pause oder dergleichen auszugeben.

Das Steuergerät 3 ist an ein Bussystem 5 des Kraftfahrzeugs 1 angeschlossen, hier einen CAN-Bus, über den verschiedene Fahrzeugsystem des Kraftfahrzeugs 1 Daten austauschen können. Vorliegend empfängt und verarbeitet das Steuergerät 3 von einer Innenraumkamera 6, einer Pedal- und Lenkradsensorik 7 und von hier nur angedeuteten, weiteren Fahrzeugsystemen 8 empfangene Daten. Dabei wird zur Bestimmung der Zustandsgrößen insbesondere eine Auswertung der verarbeiteten Daten im Hinblick auf die Bewegung des Kopfes des Fahrers, die Augen des Fahrers, das Lenkverhalten des Fahrers, das Brems- und Beschleunigungsverhalten des Fahrers, die Genauigkeit des Spurhaltens des Fahrers, die Bedienung von Bedienelementen durch einen Fahrer und dergleichen durchgeführt, wie dies im Stand der Technik grundsätzlich bekannt ist.

Damit eine Vergleichsbasis, also ein Normalzustand des Fahrers vorliegt, ist eine entsprechende Kalibrierung und/oder Einstellung von Betriebsparametern des Fahrzeugsystems 2 notwendig, wofür vorliegend eine sogenannte "Baseline" beschreibende Referenzdaten von Referenzdatensätzen verwendet werden. Die Referenzdatensätze werden mittels des erfindungsgemäßen Verfahrens aufgenommen, zu dessen Durchführung das Steuergerät 3 ausgebildet ist.

Hierzu werden beim erfindungsgemäßen Verfahren kontinuierlich eine Vielzahl von Bedingungen einer Bedingungsgruppe überprüft, wobei nur bei Eintritt aller Bedingungen die Aufnahme eines Referenzdatensatzes erfolgt. Die Bedingungen bzw. ihr Vorhandensein der Bedingungsgruppe werden dabei in Abhängigkeit von die Fahrsituation beschreibenden Fahrsituationsdaten dynamisch angepasst, worauf im späteren noch näher eingegangen werden soll.

Fig. 2 zeigt eine Prinzipskizze, bei der die in diesem Ausführungsbeispiel verwendeten Bedingungen 9a - 9q in drei Untergruppen 10a, 10b und 10c aufgeteilt sind.

Die Untergruppe 10a betrifft dabei Bedingungen 9a - 9h, die Egodaten 11 des Kraftfahrzeugs 1 auswerten, darunter beispielsweise die Geschwindigkeit, den Lenkwinkel, die Beschleunigung und dergleichen. Auch eine Pedalsensorik ist in diesem Fall bereits in den Egodaten umfasst.

Die Gruppe 10b enthält Bedingungen 9i - 9m, die Sensordaten 12 der Innenraumkamera 6 auswerten. Die Sensordaten der Innenraumkamera 6 werden dann, gegebenenfalls vorausgewertet, auch in den Referenzdatensätzen gespeichert und auch durch die Funktion des Fahrzeugsystems 2, wie oben bereits angedeutet, ausgewertet. Derartige Untergruppen 10b können selbstverständlich auch für andere, für das Fahrzeugsystem 2 wesentliche Sensoren vorhanden sein.

Die Bedingungen 9n - 9p mit einer später noch zu erläuternden Vorabbedingung der Untergruppe 10c werten Systemdaten 13 weiterer Fahrzeugsysteme 8 aus, vorliegend insbesondere Systemdaten 13 eines ACC-Systems als querführendes Fahrerassistenzsystem und eines Spurhaltesystems als längsführendes Fahrerassistenzsystem. Auch wenn die beiden Fahrerassistenzsysteme nicht in Betrieb sind, nehmen sie doch das Spurverhalten und das Abstandsverhalten zu einem voranfahrenden Fahrzeug des Kraftfahrzeugs 1 betreffende Systemdaten 13 auf, die über den Bus 5 auch dem Steuergerät 3 zur Verfügung gestellt werden.

Der Kasten 14 der Fig. 2 symbolisiert eine harte Und-Verknüpfung, das bedeutet, alle Bedingungen 9a - 9q müssen erfüllt sein, damit in einem Schritt 15 die Aufnahme von Referenzdaten eines Referenzdatensatzes 16 solange erfolgt, bis eine der Bedingungen 9a - 9q nicht mehr erfüllt ist.

Die Bedingung 9a betrifft dabei das Überschreiten einer Mindestgeschwindigkeit durch die aktuelle Geschwindigkeit des Kraftfahrzeugs 1. Die Mindestgeschwindigkeit kann dabei beispielsweise 40 km/h betragen, wobei auch sie, worauf im Folgenden noch näher eingegangen werden wird, Gegenstand einer dynamischen Anpassung sein kann.

Gemäß der Bedingung 9b muss der Betrag des Lenkwinkels einen maximal zulässigen Schwellwert für den Lenkwinkel unterschreiten, beispielsweise 10°. Die Bedingung 9c fordert ferner, dass der Blinker nicht gesetzt ist.

Die Bedingung 9d bezieht sich auf die Beschleunigung. Hier darf der Betrag der Beschleunigung eine maximal zulässige Beschleunigung nicht überschreiten, wobei gleichzeitig gemäß der Bedingung 9e ein Bremsen des Fahrers, das bedeutet, eine Betätigung des Bremspedals, ausgeschlossen sein soll. Dabei sei an dieser Stelle darauf hingewiesen, dass eine negative Beschleunigung im Sinne der Bedingung 9d selbstverständlich auch durch eine Motorbremse auftreten kann.

Die Bedingung 9f fordert, dass der Gaspedalgradient kleiner als ein Schwellwert für den Gaspedalgradienten ist, so dass zu schnelle Betätigungen des Gaspedals die Aufnahme von Referenzdaten ebenso unterbinden. Die Bedingung 9g betrifft die Betätigung bestimmter Bedienelemente, vorliegend solcher, die nicht konkret auf den Fahrbetrieb des Kraftfahrzeugs 1 bezogen sind, insbesondere also von Bedienelementen einer Klimaanlage und/oder eines Multimedia-Systems. Diese müssen vorliegend für eine Zeitspanne von 15 Sekunden nicht betätigt worden sein, damit eine Aufnahme von Referenzdaten ermöglicht wird.

In der Bedingung 9h wird hier rein aus Egodaten des Kraftfahrzeugs, konkret dem Lenkwinkel, einer gemessenen Zeit und der Geschwindigkeit eine Kurvigkeit auf den letzten 1,5 km/h Fahrtstrecke betrachtet. Diese Kurvigkeit soll nun ebenso einen Schwellwert unterschreiten, damit die Bedingung 9h erfüllt ist.

Die Bedingung 9i, die wie die Bedingungen 9j, 9k, 9l und 9m Sensordaten 12 der Innenraumkamera 7 auswertet, betrifft die Qualität der Kameradaten. Ein aus der Qualität der Sensordaten 12 ermittelter Gütewert muss einen Minimalwert überschreiten.

Die Bedingungen 9j und 9k betreffen die Horizontalbewegung des Kopfes des Fahrers, mithin die Bewegung des Kopfes in einer horizontalen Ebene (links-rechts-Bewegung), die durch einen horizontalen Schwenkwinkel (heading-Winkel) beschrieben wird. Gemäß der Bedingung 9j muss der Betrag des Schwenkwinkels kleiner als ein Schwellwert, beispielsweise 25°, sein. Gemäß der Bedingung 9k wird die Spreizung über einen Zeitraum von zwei Sekunden betrachtet. Diese muss kleiner als 25° sein.

Ähnliche Betrachtungen werden in den Bedingungen 9l und 9m für den vertikalen Schwenkwinkel (pitch-Winkel) des Kopfes des Fahrers durchgeführt, wobei der Betrag gemäß Bedingung 9l kleiner als 15° sein soll, die Spreizung über zwei Sekunden gemäß Bedingung 9m kleiner als 15°, aufgenommen wiederum über zwei Sekunden.

Bedingungen 9n - 9q der Untergruppe 10c betreffen die Auswertung der Systemdaten 13 des ACC-Systems und des Spurhaltesystems, wobei die Bedingungen 9n und 9o bereits vorwegnehmend einen Fall dynamischer Anpassung darstellen, da sie eine Vorbedingung umfassen, um überhaupt als Teil der Bedingungsgruppe ausgewertet zu werden. So betrifft nämlich die Bedingung 9n eine mindestens vorzusehende Zeitlücke zu einem voranfahrenden Fahrzeug, die beispielsweise zwischen 2,3 und 3 Sekunden liegen kann. Die Bedingung 9o betrifft das Vorliegen einer relativen Geschwindigkeit zu einem voranfahrenden Fahrzeug, die im Wesentlichen 0 betragen soll, also in einem engen Intervall um den Wert 0 liegen muss. Entsprechend betrifft die Vorbedingung die Tatsache, ob überhaupt ein voranfahrendes Fahrzeug vorhanden ist. Ist dies nicht der Fall, werden die Bedingungen 9n und 9o gar nicht ausgewertet.

In der Bedingung 9p wird überprüft, ob die Zeit bis zum Verlassen einer Fahrspur (time to line crossing - TTLC) einen Schwellwert unterschreitet. In der Bedingung 9q wird überprüft, ob die Standardabweichung von der Mitte der aktuellen Fahrspur (standard deviation lane position - SDLP) ebenso einen Schwellwert unterschreitet.

Nur dann, wenn alle Bedingungen zutreffen (wobei die Bedingungen 9n und 9o selbstverständlich nur bei vorhandenem Vorderfahrzeug überprüft werden), findet die Aufnahme eines Referenzdatensatzes statt.

Bezüglich der Bedingungen 9n und 9o wurde bereits erläutert, dass abhängig von Fahrsituationsdaten eine dynamische Anpassung von in der Bedingungsgruppe, gebildet hier durch die Untergruppen 10a, und 10b und 10c, vorhandenen Bedingungen erfolgen kann, denn die Bedingungen 9n und 9o müssen nur dann vorliegen, wenn auch ein voranfahrendes Fahrzeug existiert. Doch auch in anderen, bislang noch nicht näher diskutierten Aspekten findet eine dynamische Anpassung der Bedingungsgruppe wie auch der darin enthaltenen Bedingungen 9a bis 9q statt, worauf nun näher eingegangen werden soll.

Zunächst sei angemerkt, dass in diesem Ausführungsbeispiel der vorliegenden Erfindung ein Zeitraum nach dem Beginn einer Fahrt vorbestimmt ist, in dem die Bedingungen 9a - 9q zumindest teilweise leichter erfüllbar sind, beispielsweise durch eine entsprechende Anpassung von Schwellwerten. Zweck dieses vorbestimmten Zeitraums, der auch als Kalibrierphase bezeichnet werden kann, ist es, möglichst schnell Referenzdaten zu erhalten. So findet eine möglichst schnelle Kalibrierung bzw. Einstellung von Betriebsparametern des Fahrzeugsystems 2 statt.

Ferner ist vorgesehen, dass bei einer Nichtverfügbarkeit eines Sensors oder eines Fahrzeugsystems bzw. einer zur Ermittlung von Egodaten ausgebildeten Vorrichtung die auf die ausfallenden Daten bezogenen Bedingungen aus der Bedingungsgruppe entfernt werden. Wird also beispielsweise festgestellt, dass die Innenraumkamera 6 keinerlei Sensordaten 12 liefert, können die Bedingungen 9i - 9m aus der Bedingungsgruppe entfernt werden. Es wird mithin ständig überwacht, ob ein Datenausfall oder dergleichen vorliegt.

Schließlich erfolgt in diesem Ausführungsbeispiel des erfindungsgemäßen Verfahrens auch eine Anpassung in Abhängigkeit einer Straßenklasse, die beispielsweise aus einem Navigationssystem zur Verfügung gestellt werden kann. So werden auf einer Autobahn beispielsweise die Bedingungen 9p und 9q enger gefasst, während im Stadtverkehr die Bedingungen 9n und 9o aus der Bedingungsgruppe entfernt werden.

Selbstverständlich sind auch andere Möglichkeiten denkbar, eine sinnvolle Anpassung der Bedingungen bzw. der Bedingungsgruppe vorzunehmen, die in weiteren Ausführungsbeispielen realisiert werden können.

Wie bereits erwähnt wurde, werden Referenzdaten im Schritt 15 aufgenommen, bis eine Bedingung 9a - 9q nicht mehr erfüllt ist. Der Referenzdatensatz 16 wird dabei in einer Speichereinrichtung 17 (vgl. Fig. 1) gespeichert, wobei auch Ausführungsbeispiele denkbar sind, in denen mehrere Speichereinrichtungen 17 vorgesehen sind, insbesondere dann, falls längere Auswertungen durch den Referenzdatensatz 16 auswertende Auswertemodule notwendig sind, die bis zur weiteren Aufnahme von Referenzdaten andauern. Vorliegend werden die einzelnen Referenzdatensätze 16 in der Speichereinrichtung 17 nach Art einer Liste abgelegt, wobei beispielsweise ein Ringspeicher verwendet werden kann. Mit den Referenzdatensätzen wird der Aufnahmezeitpunkt und die Aufnahmedauer abgespeichert, wobei letztere meist im Bereich zwischen zwei Sekunden und drei Minuten liegt.

Sobald ein neuer Referenzdatensatz 16 in der Speichereinrichtung 17 abgelegt wurde, wird ein entsprechendes Triggersignal an die Auswertungsmodule geschickt, welche sodann zunächst überprüfen, ob der Referenzdatensatz von ihnen auszuwerten ist, wofür als Kriterium hier für wenigstens einen Teil der Auswertungsmodule eine minimale Aufnahmedauer vorgesehen ist. Insbesondere dann, wenn statistische Auswertungen erfolgen, sind teilweise bestimmte Aufnahmedauern sinnvoll, um hinreichend genaue Betriebsparameter und dergleichen zu erhalten. Ist eine Kalibrierungsphase, also ein vorbestimmter Zeitraum nach dem Beginn einer Fahrt, vorgesehen, so können auch die Kriterien angepasst werden, indem beispielsweise niedrigere minimale Aufnahmedauern für den Zeitraum vorgesehen werden, so dass auch auf diese Weise die schnelle Gewinnung von Daten begünstigt wird.

Es sei an dieser Stelle angemerkt, dass auch Realisierungen denkbar sind, in denen die Funktionen des Fahrzeugsystems 2, beispielsweise die beschriebene Warnfunktion, unmittelbar nach Fahrtantritt zur Verfügung stehen, wenn auf weniger bevorzugte Weise eine voreingestellte Kalibrierung, mithin voreingestellte Betriebsparameter verwendet werden oder, was erfindungsgemäß bevorzugt ist, eine Kalibrierung bzw. Betriebsparameter, die auf wenigstens einem während einer vorangegangenen Fahrt aufgenommenen Referenzdatensatz basieren, wobei bei der vorangegangenen Fahrt derselbe Fahrer aktiv war. Hierzu wird der Fahrer vor Beginn einer Fahrt identifiziert, was beispielsweise über die Daten der Innenraumkamera 6 oder über ein anderes Identifikationsmittel erfolgen kann. Sodann werden eine dem Fahrer entsprechende Kalibrierung und/oder dem Fahrer entsprechende Betriebsparameter eingestellt, insbesondere die Einstellungen übernommen, wie sie am Ende der letzten Fahrt des Fahrers vorlagen. Während die Kalibrierung auf die aktuelle Baseline erfolgt, können nun dennoch schon die Funktionen des Fahrzeugsystems 2 genutzt werden, da bereits Einstellungen vorliegen.

Es sei an dieser Stelle noch angemerkt, dass vorliegend die Auswertung in den Auswertungsmodulen so erfolgt, dass immer der letzte, den Kriterien entsprechende Referenzdatensatz 16 ausgewertet wird, wobei die bisherige Einstellung durch eine Wichtung jedoch weiterhin berücksichtigt wird. Es sind auch andere Ausführungen denkbar, in denen beispielsweise immer eine bestimmte Zahl der neuesten Referenzdatensätze 16 ausgewertet werden oder ein bestimmtes Zeitintervall vor dem aktuellen Zeitpunkt betrachtet wird.

## Patentansprüche

1. Verfahren zum Betrieb eines Fahrzeugsystems (2) eines Kraftfahrzeugs (1) zur Bestimmung wenigstens einer den Zustand eines Fahrers, insbesondere seine Aufmerksamkeit und/oder seine Müdigkeit, beschreibenden Zustandsgröße, wobei bei der Ermittlung der Zustandsgröße wenigstens ein einen Referenzzustand, insbesondere einen Normalzustand, des Fahrers beschreibender Referenzdatensatz (16) verwendet wird,
**dadurch gekennzeichnet,**
**dass** während einer gesamten Fahrt des Kraftfahrzeugs (1) kontinuierlich die Bedingungen (9a-9q) einer wenigstens eine Bedingung (9a-9q) umfassenden Bedingungsgruppe überprüft werden, wobei bei Eintritt aller Bedingungen (9a-9q) der Bedingungsgruppe solange, wie alle Bedingungen (9a-9q) erfüllt sind, ein Referenzdatensatz (16) aufgenommen wird und zur Kalibrierung und/oder Anpassung wenigstens eines Betriebsparameters des Fahrzeugsystems (2) ausgewertet wird.

2. Verfahren nach Anspruch 1,
**dadurch gekennzeichnet,**
**dass** die Bedingungen (9a-9q) wenigstens eine auf Egodaten (11) des eigenen Kraftfahrzeugs (1) bezogene Bedingung (9a-9h) und/oder wenigstens eine auf Sensordaten (12) wenigstens eines Sensors, insbesondere einer Innenraumkamera (6), bezogene Bedingung (9i-9m) und/oder wenigstens eine auf Systemdaten (13) wenigstens eines weiteren Fahrzeugssystems (8), insbesondere von längsführenden oder querführenden Fahrerassistenzsystemen, bezogene Bedingung (9n-9q) überprüft werden.

3. Verfahren nach Anspruch 2,
**dadurch gekennzeichnet,**
**dass** als auf Egodaten (11) bezogene Bedingung (9a-9h) das Überschreiten einer Minimalgeschwindigkeit des Kraftfahrzeugs (1) und/oder das Unterschreiten eines Schwellwerts für den Betrags des Lenkwinkels und/oder ein nicht gesetzter Blinker und/oder ein Unterschreiten eines Schwellwerts für den Betrag der Beschleunigung und/oder die Nichtbetätigung eines Bremsbedienelements durch den Fahrer und/oder das Unterschreiten eines Schwellwertes für den Gaspedalgradienten und/oder die Nichtbetätigung wenigstens eines Bedienelements für eine vorbestimmte Zeitspanne und/oder eine einen Schwellwert unterschreitende, aus Egodaten bestimmte Kurvigkeit verwendet werden.

4. Verfahren nach Anspruch 2 oder 3,
**dadurch gekennzeichnet,**
**dass** als auf Sensordaten (12) einer Innenraumkamera (6) bezogene Bedingung (9i-9m) die Überschreitung eines Schwellwertes durch einen die Qualität der Sensordaten (12) beschreibenden Gütewert und/oder die Unterschreitung eines Schwellwerts für den Betrag des horizontalen Schwenkwinkels des Kopfes des Fahrers aus einer geradeaus schauenden Position und/oder die Unterschreitung eines Schwellwerts für die auf den horizontalen Schwenkwinkel des Kopfes des Fahrers aus der geradeaus schauenden Position bezogenen Spreizung für ein vorbestimmtes Zeitintervall und/oder die Unterschreitung eines Schwellwerts für den Betrag des vertikalen Schwenkwinkels des Kopfes des Fahrers aus einer geradeaus schauenden Position und/oder die Unterschreitung eines Schwellwerts für die auf den vertikalen Schwenkwinkel des Kopfes des Fahrers aus der geradeaus schauenden Position bezogenen Spreizung für ein vorbestimmtes Zeitintervall verwendet wird.

5. Verfahren nach einem der Ansprüche 2 bis 4,
**dadurch gekennzeichnet,**
**dass** als auf Systemdaten (13) eines weiteren Fahrzeugsystems (8) bezogene Bedingung (9n-9q)) eine Unterschreitung eines Schwellwertes für die Zeit bis zum Verlassen einer Fahrspur und/oder eine Unterschreitung eines Schwellwertes für die Standardabweichung von der Mitte der aktuellen Fahrspur und/oder, falls ein voranfahrendes Fahrzeug detektiert wird, das Vorhandensein einer minimalen Zeitlücke zu dem voranfahrenden Fahrzeug und/oder eine in einem Intervall um Null liegende relative Geschwindigkeit zu dem voranfahrenden Fahrzeug verwendet wird.

6. Verfahren nach einem der vorangehenden Ansprüche,
**dadurch gekennzeichnet,**
**dass** die Bedingungen (9a-9q) und/oder die Zugehörigkeit von Bedingungen (9a-9q) zu der Bedingungsgruppe in Abhängigkeit von die Fahrsituation beschreibenden Fahrsituationsdaten dynamisch angepasst werden.

7. Verfahren nach Anspruch 6,
**dadurch gekennzeichnet,**
**dass** bei einer Nichtverfügbarkeit eines Sensors und/oder eines Fahrzeugsystems (8) und/oder einer zur Ermittlung von Egodaten (11) ausgebildeten Vorrichtung die auf die ausfallenden Daten bezogenen Bedingungen (9a-9q) aus der Bedingungsgruppe entfernt werden.

8. Verfahren nach Anspruch 6 oder 7,
**dadurch gekennzeichnet,**
**dass** für einen vorbestimmten Zeitraum nach dem Beginn einer Fahrt zur leichteren Erfüllbarkeit angepasste Bedingungen (9a-9q) verwendet werden.

9. Verfahren nach einem der Ansprüche 6 bis 8,
**dadurch gekennzeichnet,**
**dass** die Anpassung und/oder die Berücksichtigung von Bedingungen (9a-9q) in der Bedingungsgruppe in Abhängigkeit von einer aktuellen Fahrumgebung, insbesondere einer Straßenklasse, erfolgt:

10. Verfahren nach einem der vorangehenden Ansprüche,
**dadurch gekennzeichnet,**
**dass** die Referenzdatensätze (16) mit einer ihre Aufnahmezeit angebenden Zeitinformation in einer Speichereinrichtung (17) gespeichert werden.

11. Verfahren nach Anspruch 10,
**dadurch gekennzeichnet,**
**dass** wenigstens ein Auswertungsmodul zur Auswertung der Referenzdatensätze (16) verwendet wird, wobei wenigstens ein Kriterium zur Auswahl der durch ein Auswertungsmodul auszuwertenden Referenzdatensätze (16) verwendet wird, insbesondere eine minimale Aufnahmedauer.

12. Verfahren nach Anspruch 11,
**dadurch gekennzeichnet,**
**dass** das Kriterium in Abhängigkeit eines Fahrsituationsparameters angepasst wird, insbesondere eine reduzierte minimale Aufnahmedauer in einem vorbestimmten Zeitraum nach dem Beginn einer Fahrt verwendet wird.

13. Verfahren nach einem der vorangehenden Ansprüche,
**dadurch gekennzeichnet,**
**dass** zu Beginn einer Fahrt das Fahrzeugsystem (2) mit einer voreingestellten Kalibrierung und/oder voreingestellten Betriebsparametern und/oder mit einer aus wenigstens einem in einer vorangegangenen Fahrt, insbesondere einer vorangegangenen Fahrt des selben Fahrers, aufgenommenen Referenzdatensatz (16) gewonnenen Kalibrierung und/oder aus wenigstens einem in einer vorangegangenen Fahrt, insbesondere einer vorangegangenen Fahrt des selben Fahrers, aufgenommenen Referenzdatensatz (16) gewonnenen Betriebsparametern betrieben wird.

14. Verfahren nach Anspruch 13,
**dadurch gekennzeichnet,**
**dass** ein Fahrer vor Beginn einer Fahrt identifiziert wird und eine dem Fahrer entsprechende Kalibrierung und/oder dem Fahrer entsprechende Betriebsparameter eingestellt werden.

15. Kraftfahrzeug (1), umfassend ein Fahrzeugsystem (2) zur Bestimmung wenigstens einer den Zustand eines Fahrers, insbesondere seine Aufmerksamkeit und/oder seine Müdigkeit, beschreibenden Zustandsgröße, und ein zur Durchführung eines Verfahrens nach einem der vorangehenden Ansprüche ausgebildetes Steuergerät (3).
